# FASCICULE DE BREVET EUROPEEN

(11) **EP 3 117 127 B1**
(45) Date de publication et mention de la délivrance du brevet: **06.06.2018**
(21) Numéro de dépôt: 15709231.3
(22) Date de dépôt: 10.02.2015
(51) Int. Cl.: F16H 61/04, F16H 61/688, F16H 63/46

(54) **PROCÉDÉ DE CONTRÔLE, LORS D'UN CHANGEMENT DE RAPPORTS, D'UN GROUPE MOTOPROPULSEUR INCLUANT UNE BOITE DE VITESSES AUTOMATISÉE**
STEUERUNGSVERFAHREN WÄHREND EINES GANGWECHSELS EINES ANTRIEBSTRANGS EINES AUTOMATIKGETRIEBES
CONTROL METHOD DURING A SHIFT OF GEARS OF A POWER TRAIN INCLUDING AN AUTOMATIC TRANSMISSION

(30) Priorité: 14.03.2014 FR 1452120
(43) Date de publication de la demande: 18.01.2017
(73) Titulaire: PSA Automobiles SA, 78300 Poissy (FR)
(72) Inventeur: SCHAEFFER, Eric, F-75013 Paris (FR); DESCHAMPS, Alexandre, F-78530 Buc (FR)
(86) Numéro de dépôt international: PCT/FR2015/050320
(87) Numéro de publication internationale: WO 2015/136169

(56) Documents cités:
- EP-A1- 1 271 010
- EP-A1- 1 672 253
- EP-A1- 2 336 604
- GB-A- 2 478 623

## Description

La présente invention est relative à un procédé de contrôle, lors d'un changement de rapports, d'un groupe motopropulseur incluant une boîte de vitesses automatisée.

Plus particulièrement, l'invention concerne un procédé de contrôle, lors d'un changement de rapports, d'un groupe motopropulseur à boîte de vitesses automatisée, double embrayage et moteur, chaque rapport de la boîte de vitesses étant déterminé par un engrenage ayant un pignon fixe relativement à une arbre primaire de la boîte de vitesses et un pignon fou relativement à un arbre secondaire de la boîte de vitesses qui comprend deux arbres primaires dont l'un est dédié à des rapports d'ordre pairs et l'autre est dédié à des rapports d'ordre impair, chacun des arbres primaire étant associé à un embrayage spécifique appartenant à l'embrayage double.

Le document FR2935770 décrit une boîte de vitesses associée à un double embrayage, dans le cadre d'engrenages dont le pignon fou est accouplé à son arbre par crabotage. Dans ce document, il est proposé de munir la boîte de vitesses d'un frein pour ajuster les régimes de moteur et d'arbre primaire. Cette solution est spécifique et permet une synchronisation sans utiliser de synchroniseur à friction. Le document GB 2 478 623 A décrit un procédé et un dispositif de contrôle ayant toutes les caractéristiques du préambule des revendications 1 et 8.

Cependant, il peut être intéressant de pouvoir utiliser une architecture de boîte de vitesses qui soit par exemple commune à un véhicule à boîte de vitesses manuelle et à un véhicule à boîte de vitesses automatisée, en comprenant des synchroniseurs à friction. Ainsi, dans ce cas, si un ensemble de transmission comprend une boîte de vitesses ayant deux arbres primaires et un double embrayage pourvu d'un premier embrayage pouvant accoupler l'un des arbres primaires à un moteur et pourvu d'un deuxième embrayage pouvant accoupler l'autre des arbres primaires au moteur, les synchroniseurs par friction seraient susceptibles d'être éprouvés par le couple de traînée du double embrayage et sont donc d'autant plus volumineux et chers qu'ils doivent être robustes.

Un problème est donc de trouver comment commander la boîte de vitesses pour que les changements de rapport soient rapides et que les dispositifs de synchronisation soient préservés de toute usure prématurée. Un tel problème est encore plus important lorsque les changements de rapports sont non consécutifs dans leur ordre de rapport de démultiplication, les écarts de régime moteur entre les rapports étant importants. Tel est le cas par exemple pour un passage de sixième rapport de démultiplication au quatrième rapport de démultiplication ou par exemple pour un changement de rapport de deuxième rapport vers le quatrième rapport.

La présente invention a notamment pour but d'améliorer les solutions connues et/ou de proposer une solution alternative.

A cet effet, l'invention a pour objet un procédé de contrôle, lors d'un changement de rapports, d'un groupe motopropulseur à boîte de vitesses automatisée, double embrayage et moteur, chaque rapport de la boîte de vitesses étant déterminé par un engrenage ayant un pignon fixe relativement à une arbre primaire de la boîte de vitesses et un pignon fou relativement à un arbre secondaire de la boîte de vitesses qui comprend deux arbres primaires dont l'un est dédié à des rapports d'ordre pairs et l'autre est dédié à des rapports d'ordre impair, chacun des arbres primaire étant associé à un embrayage spécifique appartenant à l'embrayage double. Lors d'un changement de deux rapports d'un rapport initial vers un rapport cible qui sont non consécutifs alors que la boîte de vitesses a ses pignons fous associés à leur arbre secondaire via des dispositifs synchroniseurs, le procédé comprend tout d'abord une étape de dégagement du rapport initial, une étape d'ajustement du régime du moteur en fonction dudit rapport cible non consécutif audit rapport initial et une étape de fermeture de l'embrayage correspondant au rapport cible alors que le dispositif synchroniseur de ce rapport cible est à un état neutre au début de cette fermeture dudit embrayage puis, après ce début de fermeture et avant la fin de l'étape d'ajustement de régime moteur, une étape de synchronisation via le dispositif synchroniseur du rapport cible. L'étape de synchronisation comprend une phase de pilotage en effort du dispositif synchroniseur du rapport cible pendant la fin de l'étape de fermeture de l'embrayage puis une phase d'engagement final pilotée en position dudit dispositif synchroniseur, pour terminer l'engagement du rapport cible alors que la fin de l'étape de fermeture de l'embrayage intervient. Un instant de fin de fermeture de l'embrayage correspondant au rapport cible intervient pendant la phase d'engagement final pilotée en position du dispositif synchroniseur du rapport cible.

Dans divers modes de réalisation du procédé selon l'invention, on peut éventuellement avoir recours en outre à l'une et/ou à l'autre des dispositions suivantes :
- l'étape de synchronisation a lieu quand le régime du moteur et le régime de l'arbre secondaire associé au pignon fou du rapport cible sont sensiblement égalisés ;
- dès le début de l'étape de fermeture de l'embrayage correspondant au rapport cible, le régime de l'arbre secondaire associé au rapport cible commence à s'ajuster avec le régime du moteur, tout dispositif synchroniseur sur cet arbre secondaire étant au neutre à ce début de l'étape de fermeture de l'embrayage correspondant au rapport cible ;
- l'étape d'ajustement du régime du moteur en fonction dudit rapport cible inclue de faire varier régulièrement le régime moteur jusqu'à l'étape de fermeture de l'embrayage et l'étape de synchronisation auxquelles la variation de régime moteur et le régime de l'arbre secondaire du rapport cible s'accordent ;
- l'étape de dégagement du rapport initial est associée à une étape d'ouverture de l'embrayage correspondant au rapport initial pendant que commence l'étape d'ajustement du régime du moteur en fonction dudit rapport cible ;
- l'étape de dégagement du rapport initial est après l'étape d'ouverture de l'embrayage correspondant au rapport initial est comprend une phase d'ouverture pilotée en position du dispositif synchroniseur du rapport initial ;
- avant l'étape de fermeture de l'embrayage correspondant au rapport cible, intervient une étape de dégagement d'un rapport initialement présélectionné qui est de même parité que le rapport cible.

Par ailleurs, l'invention a également pour objet un véhicule automobile comprenant d'une part un groupe motopropulseur incluant une boîte de vitesses automatisée, un double embrayage et un moteur, chaque rapport de la boîte de vitesses étant déterminé par un engrenage ayant un pignon fixe relativement à une arbre primaire de la boîte de vitesses et un pignon fou relativement à un arbre secondaire de la boîte de vitesses qui comprend deux arbres primaires dont l'un est dédié à des rapports d'ordre pairs et l'autre est dédié à des rapports d'ordre impair, chacun des arbres primaire étant associé à un embrayage spécifique appartenant à l'embrayage double et d'autre part une unité de contrôle apte à mettre en oeuvre le procédé de contrôle selon l'invention en pouvant commander le moteur, le double embrayage et la boîte de vitesses avec ses dispositifs synchroniseurs de manière à effectuer le dégagement du rapport initial, l'ajustement du régime du moteur en fonction du rapport cible non consécutif au rapport initial, la fermeture de l'embrayage correspondant au rapport cible alors que le dispositif synchroniseur de ce rapport cible est à un état neutre et la synchronisation via le dispositif synchroniseur du rapport cible, la synchronisation comprenant une phase de pilotage en effort du dispositif synchroniseur du rapport cible pendant la fin de la fermeture de l'embrayage puis une phase d'engagement final pilotée en position dudit dispositif synchroniseur, pour terminer l'engagement du rapport cible alors que la fin de la fermeture de l'embrayage intervient et un instant de fin de fermeture de l'embrayage correspondant au rapport cible intervenant pendant la phase d'engagement final pilotée en position du dispositif synchroniseur du rapport cible.

D'autres buts, caractéristiques et avantages de l'invention apparaîtront au cours de la description suivante d'un de ses modes de réalisation, donné à titre d'exemple non limitatif, en regard des dessins joints dans lesquels :
- la figure 1 est un schéma de principe d'un groupe motopropulseur de véhicule auquel peut s'appliquer l'invention ;
- la figure 2 est un diagramme de fonctionnement de la boîte de vitesses selon l'invention et de son double embrayage dans le groupe motopropulseur.

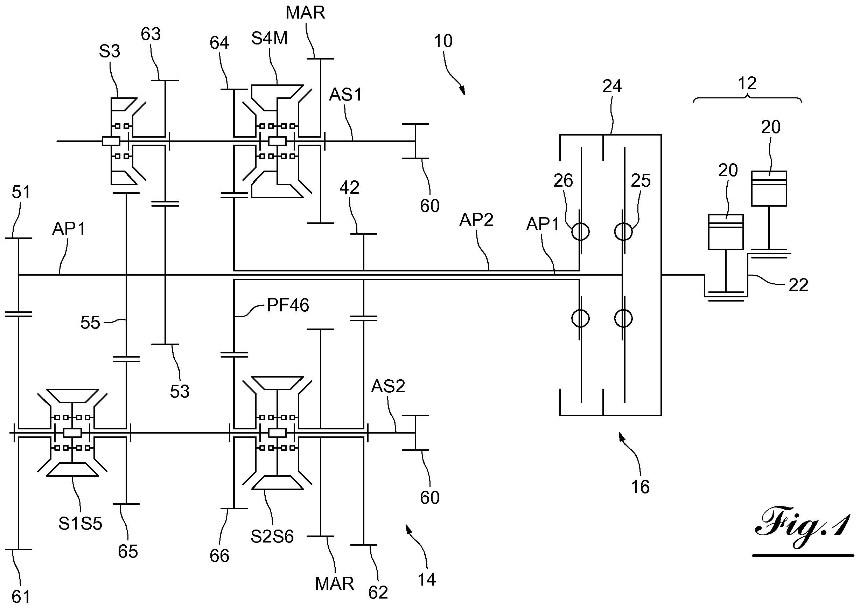

Un véhicule automobile comporte généralement un groupe motopropulseur 10 comportant un moteur 12 et une boîte de vitesses automatisée 14 pouvant être accouplés par un embrayage 16. Dans le moteur 12, les pistons 20, le vilebrequin 22 et le volant moteur 24 sont schématisés à la figure 1.

Dans le mode de réalisation de l'invention représenté à la figure 1, l'embrayage 16 est un double embrayage pourvu d'un premier embrayage 25 et d'un second embrayage 26 ayant chacun un disque pouvant être embrayé en étant fermé sur une portée annulaire appartenant à une pièce 24 solidaire du volant moteur entraîné à rotation par le vilebrequin 22. La boîte de vitesses 14 comporte un premier arbre primaire AP1 et un second arbre primaire AP2 respectivement liés à rotation à l'embrayage référencé 25 et à l'embrayage référencé 26.

Dans le mode de réalisation représenté en exemple, le second arbre primaire AP2 porte un pignon 42 du deuxième rapport de boîte et un pignon PF46 du quatrième rapport de boîte et du sixième rapport de boîte, c'est-à-dire les pignons des rapports d'ordres pairs de la boîte de vitesses.

Le premier arbre primaire AP1 porte un pignon 51 du premier rapport de boîte, un pignon 53 du troisième rapport de boîte et un pignon 55 du cinquième rapport de boîte, c'est-à-dire les pignons des rapports d'ordres impairs de la boîte de vitesses.

Dans le mode de réalisation représenté en exemple, la boîte de vitesses 14 comporte un premier arbre secondaire AS1 et un second arbre secondaire AS2 qui sont reliés à rotation à des roues motrices du véhicule via des pignons de sortie de boîte 60 disposés à une extrémité des arbres secondaires et reliés à rotation avec au moins un élément d'un différentiel non représenté. Les arbres secondaire AS1 et AS2 portent les pignons fous de la boîte de vitesses engrenés avec les pignons fixes portés par les arbres primaires AP1 et AP2.

Pour déterminer le premier rapport de démultiplication de la boîte de vitesses, le pignon 51 monté fixe à rotation sur l'arbre primaire AP1 est engrené avec un pignon 61 monté fou sur l'arbre secondaire AS2.

Pour déterminer le deuxième rapport de démultiplication de la boîte de vitesses, le pignon 42 monté fixe à rotation sur l'arbre primaire AP2 est engrené avec un pignon 62 monté fou sur l'arbre secondaire AS2.

Pour déterminer le troisième rapport de démultiplication de la boîte de vitesses, le pignon 53 monté fixe à rotation sur l'arbre primaire AP1 est engrené avec un pignon 63 monté fou sur l'arbre secondaire AS1.

Pour déterminer le quatrième rapport de démultiplication de la boîte de vitesses, le pignon PF46 monté fixe à rotation sur l'arbre primaire AP2 est engrené avec un pignon 64 monté fou sur l'arbre secondaire AS1.

Pour déterminer le cinquième rapport de démultiplication de la boîte de vitesses, le pignon 55 monté fixe à rotation sur l'arbre primaire AP1 est engrené avec un pignon 65 monté fou sur l'arbre secondaire AS2.

Pour déterminer le sixième rapport de démultiplication de la boîte de vitesses, le pignon PF46 monté fixe à rotation sur l'arbre primaire AP2 est engrené avec un pignon 66 monté fou sur l'arbre secondaire AS2.

Des pignons fous de marche arrière MAR sont à proximité du pignon fou 64 de quatrième rapport et du pignon fou 66 de sixième rapport. Le pignon fixe de marche arrière n'est pas représenté, sachant qu'il est engrené avec lesdits pignons fous MAR.

L'arbre secondaire AS1 et l'arbre secondaire AS2 portent à coulissement axial des manchons à crabots et à bagues de friction pour déterminer des dispositifs synchroniseurs. Un premier dispositif synchroniseur S1S5 est disposé entre les pignons fous 61 et 65 respectivement du premier rapport et du cinquième rapport pour être accouplé à ces derniers afin de transmettre un couple desdits pignons fous vers l'arbre secondaire AS2 quand l'un ou l'autre desdits rapports est engagé. Dans le même but, un deuxième dispositif synchroniseur S2S6 est disposé entre les pignons fous 62 et 66 respectivement des deuxième et sixième rapports. De manière analogue, un troisième dispositif synchroniseur S3 est associé au pignon fou 63 du troisième rapport pour accouplement avec l'arbre secondaire AS1. De manière analogue, un quatrième dispositif synchroniseur S4M est associé au pignon fou 64 du quatrième rapport et à l'un des pignons fous MAR de marche arrière.

Chaque dispositif synchroniseur peut occuper une position neutre de découplage de pignon fou relativement à l'arbre secondaire correspondant et une position active de couplage à rotation du pignon considéré par rapport avec son arbre, sachant que les bagues de friction ajustent les vitesses de rotation de l'arbre et du pignon fou considéré avant crabotage dudit pignon du manchon considéré dans le dispositif synchroniseur. Le principe de fonctionnement de tels dispositifs synchroniseur est connu et ne mérite pas une plus ample description. En revanche, l'invention permet avantageusement une synchronisation plus aisée des vitesses de rotations des arbres secondaires et un amoindrissement des contraintes dans les dispositifs synchroniseurs. Avantageusement, la synchronisation lors des changements de rapport est effectuée en associant l'embrayage 26 et l'embrayage 25 du double embrayage.

Des moyens de pilotage non représentés, par exemple dans au moins une unité de contrôle à calculateur, commandent le fonctionnement automatique de la boîte de vitesses 14 et de l'embrayage 16 en commandant des actionneurs par exemple hydrauliques pour d'une part le déplacement des manchons dans les dispositifs synchroniseurs et d'autre part des disques d'embrayage en position embrayée ou en position débrayée. L'embrayage 16 est constitué de manière classique, tout comme ses actionneurs et les dispositifs synchroniseurs, mais le procédé utilisé pour le pilotage de l'embrayage et des dispositifs synchroniseurs est particulier. Le calculateur n'est pas représenté aux figures car ses liaisons avec les actionneurs sont de type connues.

Concernant le fonctionnement du groupe motopropulseur, de manière générale, l'arbre secondaire ou l'arbre primaire pris en considération pour l'engagement d'un rapport cible lors d'un changement de rapport de démultiplication doit avoir sa vitesse de rotation qui est freinée ou accélérée suivant que le changement de rapport soit une montée de rapport ou une descente de rapport. Le cas qui va être pris en considération pour illustrer l'invention est celui d'un changement de rapport du sixième rapport de démultiplication vers le troisième rapport de démultiplication de la boîte de vitesses.

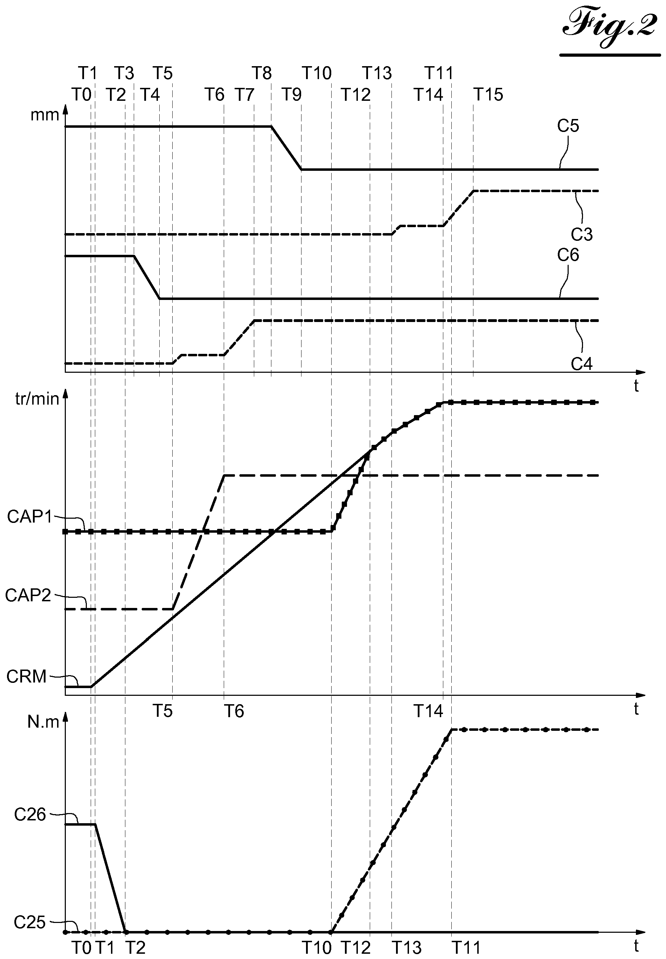

En relation avec la figure 2, pour ce changement de rapport entre le sixième rapport et le troisième rapport, il va être expliqué comment fonctionne l'ensemble de transmission comportant la boîte de vitesses 14 et son double embrayage 16, tout en considérant le fonctionnement du moteur 12 associé dans le groupe motopropulseur. Les séquences de changement de rapport vont être détaillées.

De manière générale, en changement de rapport descendant, c'est le début de la fermeture de l'embrayage associé au rapport cible qui, alors que le régime moteur est accéléré avec une pente déterminée, transmet une peu de couple à l'arbre primaire considéré et aide à la synchronisation en favorisant l'accélération du pignon fou du rapport cible, le pignon fou étant sur l'un des arbres secondaires. Dans l'exemple considéré, le rapport cible est le troisième rapport de démultiplication.

Ainsi, avantageusement, lors d'un changement de deux rapports d'un rapport initial vers un rapport cible qui sont non consécutifs alors que la boîte de vitesses a ses pignons fous associés à leur arbre secondaire via des dispositifs de synchronisation, le procédé de commande pour ce changement de rapports comprend tout d'abord une étape de dégagement du rapport initial, une étape d'ajustement du régime du moteur en fonction dudit rapport cible non consécutif audit rapport initial et une étape de fermeture de l'embrayage correspondant au rapport cible alors que le dispositif synchroniseur de ce rapport cible est à un état neutre au début de cette fermeture dudit embrayage puis, après ce début de fermeture et avant la fin de l'étape d'ajustement de régime moteur, une étape de synchronisation via le dispositif synchroniseur du rapport cible. L'étape de synchronisation a lieu quand le régime du moteur et le régime de l'arbre secondaire associé au pignon fou du rapport cible sont sensiblement égalisés. Le travail de l'embrayage de rapport cible et le travail du dispositif synchroniseur sont dans un ordre inhabituel.

A la figure 2, la courbe C25 représente le couple transmis par le premier embrayage 25 dans le temps. la courbe C26 représente le couple transmis par le second embrayage 26 dans le temps. La courbe CRM représente le régime du moteur 12 dans le temps. La courbe CAP1 représente le régime du premier arbre primaire AP1 dans le temps. La courbe CAP2 représente le régime du second arbre primaire AP2 dans le temps.

La courbe C3 représente les variations de positionnement du dispositif synchroniseur du rapport cible, à savoir le dispositif synchroniseur S3, lors du changement de rapport choisi pour illustrer l'invention. La courbe C6 représente les variations de positionnement du dispositif synchroniseur du rapport initial, à savoir le dispositif synchroniseur S2S6, lors du changement de rapport choisi pour illustrer l'invention. La courbe C4 représente les variations de positionnement du dispositif synchroniseur du quatrième rapport, à savoir le dispositif synchroniseur S4M, qui est l'un des rapports présélectionnés lors du changement de rapport choisi pour illustrer l'invention. La courbe C5 représente les variations de positionnement du dispositif synchroniseur du cinquième rapport, à savoir le dispositif synchroniseur S1S5, qui est l'un des rapports présélectionnés lors du changement de rapport choisi pour illustrer l'invention. Ces courbes C3 à C5 sont représentatives des positionnements pour les états d'engagement de rapport au niveau des crabots, les états de synchronisation par les bagues de friction et l'état au neutre des dispositifs synchroniseurs considérés.

A un instant T0, une commande de changement de rapport du sixième rapport vers le troisième rapport est commandée. Une telle commande est soit effectuée de manière automatique par le système de gestion de la boîte automatique et du moteur, soit commandée par le conducteur via une interface située dans l'habitacle de manière adéquate.

A cet instant T0, le calculateur inculque une commande d'accélération du régime moteur selon une pente régulière, vers un régime cible correspondant à la vitesse cible du véhicule quand le troisième rapport de démultiplication est censé être engagé. Cette vitesse est déduite relativement aux conditions de roulage du véhicule lorsque la commande de changement de rapport est effectuée à l'instant T0. Un tel changement de rapport étant assez rapide, l'estimation peut être effectuée de manière relativement fiable, même en considérant par exemple que le conducteur appuie sur la pédale de frein.

A l'instant T0, pour ce qui concerne le sixième rapport, l'actionneur correspondant de commutation de rapport, à savoir le dispositif synchroniseur S2S6, est en position active avec les crabots engagés du fait que le sixième rapport est en prise et est engagé. Il est à noter qu'à l'instant T0, l'embrayage 25 associé au premier arbre primaire AP1 associé aux rapports impairs est ouvert en position débrayée. De plus, comme le permet le fonctionnement d'une boîte de vitesses à double embrayage pour plus de réactivité en temps normal, le cinquième rapport est engagé de manière prévisionnelle en envisageant une éventuelle descente de rapport, l'ouverture de l'embrayage 25 associé à ce cinquième rapport permettant cette activation de cinquième rapport sans accouplement avec le moteur.

A un instant T1, une fraction de seconde après l'instant T0, l'embrayage 26 associé au second arbre primaire AP2 commence à être ouvert par l'intermédiaire du système de commande, par exemple incluant une commande hydraulique. A un instant T2, cet embrayage 26 est en position débrayée et il est donc complètement ouvert, si bien qu'il n'y a plus de couple transmis entre le moteur 12 et ledit arbre primaire AP2. Entre les instants T1 et T2, la figure 2 montre en bas du diagramme que la pente de l'ouverture de l'embrayage de la partie paire de la boîte de vitesses est régulière. En variante équivalente, l'instant T0 et l'instant T1 pourraient être simultanés à l'ordre de changement de rapport, les calculs et mise en oeuvre d'actionneurs étant très rapides.

A un instant T3, une fraction de seconde après l'instant T2, le dispositif synchroniseur S2S6 est commandé pour passer de sa position active, avec les crabots de sixième rapport engagés, à sa position neutre avec ces crabots dégagés. Un instant T4 marque la fin de ce désengagement de crabot et la mise au neutre dudit dispositif synchroniseur. Entre l'instant T3 et l'instant T4, l'actionneur de commutation constitué par le dispositif synchroniseur est dans une phase d'ouverture pilotée en position.

Entre l'instant T4 et un instant T5, le dispositif synchroniseur S2S6 est au neutre. A l'instant T5 commence une phase de synchronisation pilotée en effort, cette phase se terminant à un instant T6. Entre l'instant T5 et l'instant T6, comme les bagues de synchronisation sont à friction pour le quatrième rapport, la vitesse de rotation du second arbre primaire AP2 augmente, la courbe CAP2 montrant cette augmentation régulière de régime au fur et à mesure du travail de synchronisation sans transmission de couple. A l'engagement de ce quatrième rapport par le dispositif synchroniseur S4M, le régime de l'arbre primaire AP2 dédié au rapport pair est accéléré car la démultiplication change vers un rapport plus court. Le régime montant à vide par l'apport de vitesses via le premier arbre secondaire AS1 entraîné à vide par les roues motrices du véhicule.

De l'instant T6 à un instant T7, le quatrième dispositif synchroniseur S4M met en oeuvre une opération de dernière phase d'engagement pilotée en position, qui correspond à l'engagement des crabots du quatrième rapport dans ledit dispositif.

L'engagement du quatrième rapport est effectué par anticipation. En effet, dans une telle boîte à commande automatisée et associée à un double embrayage, dès qu'un rapport cible est envisagé, il peut déjà être prévu l'engagement d'un rapport voisin du rapport cible, de parité inverse au rapport cible. Ici, il s'agit du quatrième rapport car le rapport cible est le troisième rapport et la vitesse du véhicule roulant initialement en sixième rapport est plutôt dans une configuration de roulage futur vers le quatrième rapport que le deuxième rapport après roulage en utilisant le rapport cible de troisième.

A l'instant T7, il est à remarquer que le premier dispositif synchroniseur, à savoir le dispositif S1S5, occupe sa position de couplage active à crabotage en correspondance du cinquième rapport. Ce cinquième rapport était déjà présélectionné à l'instant T0 comme indiqué précédemment.

A un instant T8, quand le régime du moteur 12 et le régime de l'arbre primaire AP1 des rapports impairs correspondent, l'actionneur de commutation de cinquième rapport et de premier rapport, à savoir l'actionneur associé au dispositif synchroniseur S1S5, débute une phase d'ouverture pilotée en position. Cette phase voit le dispositif synchroniseur S1S5 passer de sa position active de cinquième rapport à son état au neutre qui est atteint à un instant T9. Le neutre du dispositif synchroniseur S1S5 est maintenu, en attendant que les conditions de roulage nécessitent d'utiliser soir le premier rapport soit le cinquième rapport en tant que rapport cible ou en tant que rapport à présélectionner.

A l'instant T0 et encore à l'instant T9, le neutre du dispositif synchroniseur S3 associé au rapport cible, à savoir le troisième rapport, est maintenu. Ce maintien au neutre pour le dispositif synchroniseur dédié au rapport cible intervient jusqu'à ce qu'un faible écart de régime intervienne entre le régime moteur et le régime de l'arbre primaire dédié au rapport cible. Ce faible écart de régime sera atteint par la fermeture du second embrayage 25 dédié aux rapports impairs, le rapport cible étant ici le troisième rapport.

Pendant cette phase au neutre du dispositif synchroniseur à utiliser pour le rapport cible de troisième rapport, à un instant T10, cet embrayage 25 de rapports impairs est à son état débrayé et commence une phase de fermeture pour passer vers une position embrayée. Cette phase commence à l'instant T10 et se termine à un instant T11. A la figure 2, cette phase de fermeture du premier embrayage 25 est représentée par une pente de transmission de couple par ledit embrayage 25 associé aux rapports impairs. Cette pente est linéaire. A l'instant T10, le régime de l'arbre primaire associé au rapport cible, à savoir le premier arbre primaire AP1 des rapports impairs, s'accélère suivant une pente de variation de régime qui est linéaire pour rejoindre le régime moteur CMR dont la pente de variation est encore conforme à la pente déterminée à l'instant T0.

A un instant T12, il y a coïncidence du régime du moteur 12 avec le régime de l'arbre primaire AP1 associé aux rapports impairs de la boîte de vitesses. L'ajustement de vitesse de rotation de cet arbre primaire AP1 avec celui du moteur résulte du début de la fermeture du premier embrayage 25 associé au rapport cible. Ainsi, le régime du moteur et le régime de l'arbre secondaire associé pignon fou du rapport cible sont sensiblement égalisés et une étape de synchronisation va être établie via le dispositif synchroniseur du rapport cible, ce dispositif travaillant alors avec peu de sollicitation mécanique.

A un instant T13, l'actionneur de commutation du rapport cible constitué par le troisième rapport, à savoir le dispositif synchroniseur S3, commence une phase de pilotage en effort pour garantir l'engagement du troisième rapport lorsque le régime cible du moteur 12 et de l'arbre primaire AP1 de rapports impairs sera atteint. A cet instant T13, il y a un infléchissement de la courbe de croissance du régime moteur qui commence à s'ajuster du fait de la synchronisation du passage de rapport à engagement et de la fermeture du premier embrayage 25 qui continue.

La phase de pilotage en effort pour garantir l'engagement du troisième rapport se termine à un instant T14. A cet instant, le régime moteur et le régime du l'arbre primaire associé au rapport cible sont définitivement lié afin d'utiliser ledit rapport cible lors du roulage du véhicule, l'instant T14 étant un fragment de seconde avant l'instant T11 de fin de fermeture de l'embrayage dédié audit rapport cible.

A l'instant T14, l'actionneur de commutation du rapport cible, à savoir le dispositif synchroniseur S3 du troisième rapport, connaît une phase d'engagement final pilotée en position, pour terminer l'engagement du troisième rapport de démultiplication qui est le rapport cible. Cette phase d'engagement final se termine à un instant T15 qui est postérieur à l'instant T11 de fin de fermeture de l'embrayage dédié audit rapport cible. Ainsi, l'instant T11 de fin de fermeture de l'embrayage correspondant au rapport cible intervient pendant la phase d'engagement final pilotée en position du dispositif synchroniseur du rapport cible.

A l'instant T15, la phase d'engagement pilotée du dispositif synchroniseur S3 étant terminée, l'embrayage 25 associé aux rapports impairs de la boîte de vitesses maintient sa position fermée embrayée jusqu'à une commande ultérieure de changement de rapport par laquelle un nouveau cycle de changement de rapport, tel que celui décrit précédemment, peut être recommencé.

Avantageusement, l'invention permet de piloter la majeure partie de la synchronisation du rapport cible par la fermeture de l'embrayage correspondant. En effet tant qu'aucun rapport n'est craboté sur la moitié de boîte de vitesses considérée pour le rapport cible, le couple moteur transmis est nul. On peut donc fermer l'embrayage associé au rapport cible pour égaliser le régime moteur et le régime de l'arbre secondaire considéré pour le rapport cible de manière à engager ce rapport cible en sollicitant le dispositif synchroniseur avec des efforts faibles. En effet, la synchronisation avec ajustement des régimes de l'arbre secondaire et du moteur passe essentiellement par l'embrayage associé au rapport cible dans ladite moitié de la boîte de vitesses.

Un avantage est aussi, lors du changement de rapports, de ne pas transmettre de couple aux roues motrices pendant la commutation du dispositif synchroniseur. En effet l'un des inconvénients majeurs que peut généralement présenter la technologie des boîtes de vitesses à double embrayage et que le couple appliqué aux dispositifs synchroniseurs peut être important, ce qui entraîne une perturbation du couple transmis à la roue et le cas échéant des secousses ressenties par les occupants du véhicule. La stratégie de pilotage conforme à l'invention permet de supprimer ce couple en améliorant globalement le fonctionnement de la boîte de vitesses et le confort des occupants du véhicule. Avantageusement encore, la fermeture pour embrayer au niveau de l'embrayage du rapport cible est anticipée au début de la synchronisation, ce qui permet de raccourcir le temps de passage du rapport cible dans le cas d'un changement de rapports impliquant deux rapports non consécutifs. En effet, l'intervalle de temps séparant l'instant T0 de l'instant T15 est suffisamment court pour que les occupants du véhicule ne ressentent pas d'inconfort et que le conducteur puisse apprécier le dynamisme du véhicule.

L'exemple de boîte de vitesses 14 et de double embrayage 16 tel que décrit précédemment permet, classiquement de disposer d'un embrayage dédié aux rapports pairs de la boîte de vitesses et un embrayage dédié aux rapports impairs de la boîte de vitesses. Ainsi, classiquement lors d'un changement de rapport impliquant un premier rapport et deuxième rapport qui sont consécutifs dans l'ordre des démultiplications des manoeuvres d'ouverture et de fermeture des embrayages sont croisées, l'un des embrayages étant enfermés pour débrayer pendant que l'autre des embrayages est fermé pour embrayer. Cependant, pour certains passages de rapport tel que des sauts multiples de rapports, l'invention permet d'éviter que les dispositifs synchroniseurs ne soient fortement sollicités.

L'exemple qui a été considéré pour les sauts multiples de rapports est la descente de rapport entre le sixième rapport initial vers le troisième rapport cible mais un fonctionnement sur le même principe pourrait correspondre à un passage descendant de rapport depuis par exemple le sixième rapport vers le quatrième rapport ou par exemple depuis le sixième rapport vers le deuxième rapport. Pareillement, il pourrait s'agir d'une montée de rapport par exemple depuis le second rapport vers le quatrième rapport ou le cinquième rapport. Toute autre combinaison est évidemment envisageable pour des changements de rapport impliquant des rapports qui ne sont pas consécutifs dans l'ordre des démultiplications dans la boîte de vitesses.

Ainsi, par exemple, en considérant un changement de rapport entre le cinquième rapport et le troisième rapport, l'embrayage qui débraye pour dégager le cinquième rapport est le même que l'embrayage qui embraye pour l'engagement du troisième rapport. Le fonctionnement pour ce qui concerne l'engagement du troisième rapport est le même que celui décrit précédemment pour ce qui concerne la fermeture de l'embrayage agissant pour ajuster les régimes. La manoeuvre de l'embrayage du rapport initial n'influence pas la manoeuvre de l'embrayage du rapport cible. De même, les variations de régime du premier arbre primaire dans ce changement du cinquième rapport vers le troisième rapport seraient sur le même principe que dans le cas illustré de manière détaillée en relation avec la figure 2 relative à la stratégie de pilotage lors de la synchronisation à la commutation.

L'unité de contrôle indiquée pour mettre en oeuvre le procédé de contrôle de la boîte de vitesses, du double embrayage et du moteur lors d'un changement rapports de rapports non consécutifs peut comprendre un organe programmable tel que toute mémoire ou tout module programmable ou toute pluralité d'unités de contrôle et/ou de calculateurs ou tout autre équivalent.

## Revendications

1. Procédé de contrôle, lors d'un changement de rapports, d'un groupe motopropulseur (10) à boîte de vitesses automatisée (14), double embrayage (16) et moteur (12), chaque rapport de la boîte de vitesses étant déterminé par un engrenage (51, 61 ; 42, 62 ; 53, 63 ; PF46, 64 ; 55, 65 ; PF46, 66) ayant un pignon fixe (51 ; 42 ; 53 ; PF46 ; 55) relativement à un arbre primaire (AP1, AP2) de la boîte de vitesses et un pignon fou (61 ; 62 ; 63 ; 64 ; 65 ; 66) relativement à un arbre secondaire (AS1, AS2) de la boîte de vitesses qui comprend deux arbres primaires dont l'un (AP1) est dédié à des rapports d'ordre pairs et l'autre (AP2) est dédié à des rapports d'ordre impair, chacun des arbres primaire étant associé à un embrayage spécifique (25, 26) appartenant à l'embrayage double, dans lequel, lors d'un changement de deux rapports d'un rapport initial vers un rapport cible qui sont non consécutifs alors que la boîte de vitesses a ses pignons fous associés à leur arbre secondaire via des dispositifs synchroniseurs (S1S5, S3, S2S6, S4M), le procédé comprend tout d'abord une étape de dégagement du rapport initial (T3, T4), une étape d'ajustement du régime du moteur (T0, T14) en fonction dudit rapport cible non consécutif audit rapport initial et une étape de fermeture de l'embrayage (T10, T11) correspondant au rapport cible alors que le dispositif synchroniseur de ce rapport cible est à un état neutre au début (T10) de cette fermeture dudit embrayage puis, après ce début de fermeture et avant la fin (T14) de l'étape d'ajustement de régime moteur, une étape de synchronisation (T13, T14, T15) via le dispositif synchroniseur du rapport cible, **caractérisé en ce que** l'étape de synchronisation (T13, T14, T15) comprend une phase de pilotage en effort (T13, T14) du dispositif synchroniseur du rapport cible pendant la fin de l'étape de fermeture de l'embrayage puis une phase d'engagement final pilotée en position (T14, T15) dudit dispositif synchroniseur, pour terminer l'engagement du rapport cible alors que la fin de l'étape de fermeture de l'embrayage intervient et **en ce qu'**un instant (T11) de fin de fermeture de l'embrayage correspondant au rapport cible intervient pendant la phase d'engagement final pilotée en position (T14, T15) du dispositif synchroniseur du rapport cible.

2. Procédé selon la revendication précédente, **caractérisé en ce que** l'étape de synchronisation (T13, T14, T15) a lieu quand le régime du moteur et le régime de l'arbre secondaire associé au pignon fou du rapport cible sont sensiblement égalisés.

3. Procédé selon l'une quelconque des revendications précédentes, **caractérisé en ce que** dès le début (T10) de l'étape de fermeture de l'embrayage correspondant au rapport cible, le régime de l'arbre secondaire associé au rapport cible commence à s'ajuster avec le régime du moteur, tout dispositif synchroniseur sur cet arbre secondaire étant au neutre à ce début de l'étape de fermeture de l'embrayage correspondant au rapport cible.

4. Procédé selon l'une quelconque des revendications précédentes, **caractérisé en ce que** l'étape d'ajustement du régime du moteur (T0, T14) en fonction dudit rapport cible inclue de faire varier régulièrement le régime moteur jusqu'à l'étape de fermeture de l'embrayage (T10, T11) et l'étape de synchronisation (T13, T14, T15) auxquelles la variation de régime moteur et le régime de l'arbre secondaire du rapport cible s'accordent.

5. Procédé selon l'une quelconque des revendications précédentes, **caractérisé en ce que** l'étape de dégagement du rapport initial (T3, T4) est associée à une étape d'ouverture de l'embrayage correspondant au rapport initial (T1, T2) pendant que commence l'étape d'ajustement du régime du moteur (T0, T14) en fonction dudit rapport cible.

6. Procédé selon la revendication précédente, **caractérisé en ce que** l'étape de dégagement du rapport initial (T3, T4) est après l'étape d'ouverture de l'embrayage correspondant au rapport initial (T1, T2) est comprend une phase d'ouverture pilotée en position du dispositif synchroniseur du rapport initial.

7. Procédé selon l'une quelconque des revendications précédentes, **caractérisé en ce que**, avant l'étape de fermeture de l'embrayage (T10, T11) correspondant au rapport cible, intervient une étape de dégagement d'un rapport initialement présélectionné (T8, T9) qui est de même parité que le rapport cible.

8. Véhicule automobile comprenant d'une part un groupe motopropulseur (10) incluant une boîte de vitesses automatisée (14), un double embrayage (16) et un moteur (12), chaque rapport de la boîte de vitesses étant déterminé par un engrenage (51, 61 ; 42, 62 ; 53, 63 ; PF46, 64 ; 55, 65 ; PF46, 66) ayant un pignon fixe (51 ; 42 ; 53 ; PF46 ; 55) relativement à un arbre primaire (AP1, AP2) de la boîte de vitesses et un pignon fou (61 ; 62 ; 63 ; 64 ; 65 ; 66) relativement à un arbre secondaire (AS1, AS2) de la boîte de vitesses qui comprend deux arbres primaires dont l'un (AP1) est dédié à des rapports d'ordre pairs et l'autre (AP2) est dédié à des rapports d'ordre impair, chacun des arbres primaire étant associé à un embrayage spécifique (25, 26) appartenant à l'embrayage double, **caractérisé en ce que** il inclut une unité de contrôle mettant en oeuvre le procédé de contrôle selon l'une des revendications 1 à 7 en commandant le moteur, le double embrayage et la boîte de vitesses avec ses dispositifs synchroniseurs (S1S5, S3, S2S6, S4M) de manière à effectuer le dégagement du rapport initial (T3, T4), l'ajustement du régime du moteur (T0, T14) en fonction du rapport cible non consécutif au rapport initial, la fermeture de l'embrayage (T10, T11) correspondant au rapport cible alors que le dispositif synchroniseur de ce rapport cible est à un état neutre et la synchronisation (T13, T14, T15) via le dispositif synchroniseur du rapport cible, la synchronisation (T13, T14, T15) comprenant une phase de pilotage en effort (T13, T14) du dispositif synchroniseur du rapport cible pendant la fin de la fermeture de l'embrayage puis une phase d'engagement final pilotée en position (T14, T15) dudit dispositif synchroniseur, pour terminer l'engagement du rapport cible alors que la fin de la fermeture de l'embrayage intervient et un instant (T11) de fin de fermeture de l'embrayage correspondant au rapport cible intervenant pendant la phase d'engagement final pilotée en position (T14, T15) du dispositif synchroniseur du rapport cible.

## Patentansprüche

1. Steuerungsverfahren während eines Gangwechsels eines Antriebsstrangs (10) mit automatischem Schaltgetriebe (14), Doppelkupplung (16) und Motor (12), wobei jeder Gang des Schaltgetriebes durch ein Zahnradgetriebe (51, 61; 42, 62; 53, 63; PF46, 64; 55, 65; PF46, 66) bestimmt wird, das ein Ritzel (51; 42; 53; PF46; 55) hat, das in Bezug auf eine Hauptwelle (AP1, AP2) des Schaltgetriebes stationär ist, und ein Freilaufritzel (61; 62; 63; 64; 65; 66) in Bezug auf eine Hilfswelle (AS1, AS2) des Schaltgetriebes, das zwei Hauptwellen umfasst, von welchen eine (AP1) geradzahligen Gängen und die andere (AP2) ungeradzahligen Gängen zugeordnet ist, wobei jede der Hauptwellen mit einer spezifischen Kupplung (25, 26) assoziiert ist, die zu der Doppelkupplung gehört, wobei bei einem Wechsel von zwei Gängen von einem anfänglichen Gang zu einem Zielgang, die nicht aufeinanderfolgend sind, während das Schaltgetriebe seine Freilaufritzel mit ihrer Hilfswelle über Synchronisationsvorrichtungen (S1S5, S3, S2S6, S4M) assoziiert hat, das Verfahren zunächst einen Ausrückschritt des anfänglichen Gangs (T3, T4), einen Anpassungsschritt der Motordrehzahl (T0, T14) in Abhängigkeit von dem Zielgang, der nicht auf den anfänglichen Gang folgt, und einen Schließschritt der Kupplung (T10, T11), der dem Zielgang entspricht, umfasst, während die Synchronisationsvorrichtung dieses Zielgangs in einem neutralen Zustand am Anfang (T10) dieses Schließens der Kupplung ist, und dann, nach diesem Schließbeginn und vor dem Ende (T14) des Anpassungsschritts der Motordrehzahl, einen Synchronisationsschritt (T13, T14, T15) über die Synchronisationsvorrichtung des Zielgangs, **dadurch gekennzeichnet, dass** der Synchronisationsschritt (T13, T14, T15) eine Steuerphase unter Kraft (T13, T14) der Synchronisationsvorrichtung des Zielgangs während des Endes des Schließschritts der Kupplung umfasst, und dann eine abschließende in Position gesteuerte Einrückphase (T14, T15) der Synchronisationsvorrichtung, um das Einrücken des Zielgangs abzuschließen, während das Ende des Schließschritts der Kupplung eintritt, und dass ein Augenblick (T11) des Endes des Schließens der Kupplung, die dem Zielgang entspricht, während der abschließenden in Position gesteuerten Einrückphase (T14, T15) der Synchronisationsvorrichtung des Zielgangs eintritt.

2. Verfahren nach dem vorhergehenden Anspruch, **dadurch gekennzeichnet, dass** der Synchronisationsschritt (T13, T14, T15) stattfindet, wenn die Drehzahl des Motors und die Drehzahl der Hilfswelle, die mit dem Freilaufritzel des Zielgangs assoziiert ist, im Wesentlichen ausgeglichen sind.

3. Verfahren nach einem der vorhergehenden Ansprüche, **dadurch gekennzeichnet, dass** ab dem Beginn (T10) des Schließschritts der Kupplung, die dem Zielgang entspricht, die Drehzahl der Hilfswelle, die mit dem Zielgang assoziiert ist, beginnt, sich an die Motordrehzahl anzupassen, wobei die gesamte Synchronisationsvorrichtung auf dieser Hilfswelle bei diesem Beginn des Schließschritts der Kupplung, die dem Zielgang entspricht, im Leerlauf ist.

4. Verfahren nach einem der vorhergehenden Ansprüche, **dadurch gekennzeichnet, dass** der Anpassschritt der Motordrehzahl (T0, T14) in Abhängigkeit von dem Zielgang aufweist, dass man die Motordrehzahl regelmäßig bis zu dem Schließschritt der Kupplung (T10, T11) und dem Synchronisationsschritt (T13, T14, T15), bei welchen die Variation der Motordrehzahl und die Drehzahl der Hilfswelle des Zielgangs übereinstimmen, variieren lässt.

5. Verfahren nach einem der vorhergehenden Ansprüche, **dadurch gekennzeichnet, dass** der Ausrückschritt des anfänglichen Gangs (T3, T4) mit einem Öffnungsschritt der Kupplung assoziiert ist, die dem anfänglichen Gang (T1, T2) entspricht, während der Anpassschritt der Motordrehzahl (T0, T14) in Abhängigkeit von dem Zielgang beginnt.

6. Verfahren nach dem vorhergehenden Anspruch, **dadurch gekennzeichnet, dass** der Ausrückschritt des anfänglichen Gangs (T3, T4) nach dem Öffnungsschritt der Kupplung, der dem anfänglichen Gang (T1, T2) entspricht, liegt, und eine in Position gesteuerte Öffnungsphase der Synchronisationsvorrichtung des anfänglichen Gangs umfasst.

7. Verfahren nach einem der vorhergehenden Ansprüche, **dadurch gekennzeichnet, dass** vor dem Schließschritt der Kupplung (T10, T11), der dem Zielgang entspricht, ein Ausrückschritt eines anfänglich vorausgewählten Gangs (T8, T9), der dieselbe Parität hat wie der Zielgang, eintritt.

8. Kraftfahrzeug, das einerseits einen Antriebsstrang (10) umfasst, der ein automatisches Schaltgetriebe (14), eine Doppelkupplung (16) und einen Motor (12) aufweist, wobei jeder Gang des Schaltgetriebes durch ein Zahnradgetriebe (51, 61; 42, 62; 53, 63; PF46, 64; 55, 65; PF46, 66) bestimmt wird, das ein Ritzel (51; 42; 53; PF46; 55) hat, das in Bezug auf eine Hauptwelle (AP1, AP2) des Schaltgetriebes stationär ist, und ein Freilaufritzel (61; 62; 63; 64; 65; 66) in Bezug auf eine Hilfswelle (AS1, AS2) des Schaltgetriebes, das zwei Hauptwellen umfasst, wovon eine (AP1) geradzahligen Gängen und die andere (AP2) ungeradzahligen Gängen zugeordnet ist, wobei jede der Hauptwellen mit einer spezifischen Kupplung (25, 26) assoziiert ist, die zu der Doppelkupplung gehört, **dadurch gekennzeichnet, dass** es eine Steuereinheit aufweist, die das Steuerverfahren nach einem der Ansprüche 1 bis 7 umsetzt, indem sie den Motor, die Doppelkupplung und das Schaltgetriebe mit seinen Synchronisationsvorrichtungen (S1S5, S3, S2S6, S4M) derart steuert, dass das Ausrücken des anfänglichen Gangs (T3, T4), das Anpassen der Motordrehzahl (T0, T14) in Abhängigkeit von dem Zielgang, der nicht anschließend an den anfänglichen Gang ist, das Schließen der Kupplung (T10, T11), die dem Zielgang entspricht, während die Synchronisationsvorrichtung dieses Zielgangs in einem neutralen Zustand ist, und die Synchronisation (T13, T14, T15) über die Synchronisationsvorrichtung des Zielgangs ausgeführt wird, wobei die Synchronisation (T13, T14, T15) eine Steuerphase unter Kraft (T13, T14) der Synchronisationsvorrichtung des Zielgangs während des Endes des Schließens der Kupplung und dann eine abschließende in Position gesteuerte Einrückphase (T14, T15) der Synchronisationsvorrichtung umfasst, um das Einrücken des Zielgangs abzuschließen, während das Ende des Schließens der Kupplung eintritt, und einen Augenblick (T11) des Schließens der Kupplung, die dem Zielgang entspricht, der während der abschließenden in Position gesteuerten Einrückphase (T14, T15) der Synchronisationsvorrichtung des Zielgang eintritt.

## Claims

1. A control method, during a shift of gears, of a power train (10) with automatic transmission (14), dual clutch (16) and engine (12), each transmission ratio being determined by a gear (51, 61; 42, 62; 53, 63; PF46, 64; 55, 65; PF46, 66) having a fixed pinion (51; 42; 53; PF46; 55) relative to a primary shaft (AP1, AP2) of the gearbox and an idle pinion (61; 62; 63; 64; 65; 66) relative to a secondary shaft (AS1, AS2) of the gearbox which includes two primary shafts, one (AP1) of which is dedicated to even gears and the other (AP2) of which is dedicated to odd gears, each of the primary shafts being associated with a specific clutch (25, 26) belonging to the dual clutch, in which, during a shift of two gears from an initial gear to a target gear which are non-consecutive while the gearbox has its idle pinions associated with their secondary shaft via synchronizer devices (S1S5, S3, S2S6, S4M), the method includes firstly a step of disengagement of the initial gear (T3, T4), a step of adjustment of the engine speed (T0, T14) as a function of said non-consecutive target gear to said initial gear, and a step of closing of the clutch (T10, T11) corresponding to the target gear while the synchronizer device of this target gear is in a neutral state at the start (T10) of this closing of said clutch, then, after this start of closing and before the end (T14) of the step of adjustment of the engine speed, a step of synchronization (T13, T14, T15) via the synchronizer device of the target gear, **characterized in that** the synchronization step (T13, T14, T15) includes a phase of control in force (T13, T14) of the synchronizer device of the target gear during the end of the step of closing of the clutch, then a phase of final engagement controlled in position (T14, T15) of said synchronizer device, to terminate the engagement of the target gear while the end of the step of closing of the clutch takes place and **in that** an instant (T11) of end of closure of the clutch corresponding to the target gear occurs during the final engagement phase controlled in position (T14, T15) of the synchronizer device of the target gear.

2. The method according to the preceding claim, **characterized in that** the synchronization step (T13, T14, T15) takes place when the speed of the engine and the speed of the secondary shaft associated with the idle pinion of the target gear are substantially equalized.

3. The method according to any one of the preceding claims, **characterized in that** from the start (T10) of the step of closing of the clutch corresponding to the target gear, the speed of the secondary shaft associated with the target gear begins to adjust itself with the speed of the engine, any synchronizer device on this secondary shaft being neutral at this start of the step of closing of the clutch corresponding to the target gear.

4. The method according to any one of the preceding claims, **characterized in that** the step of adjustment of the engine speed (T0, T14) as a function of said target gear includes varying regularly the engine speed up to the step of closing of the clutch (T10, T11) and the step of synchronization (T13, T14, T15) with which the variation of engine speed and the speed of the secondary shaft of the target gear are in accord.

5. The method according to any one of the preceding claims, **characterized in that** the step of disengagement of the initial gear (T3, T4) is associated with a step of opening of the clutch corresponding to the initial gear (T1, T2) while the step of adjustment of the engine speed (T0, T14) begins as a function of said target gear.

6. The method according to the preceding claim, **characterized in that** the step of disengagement of the initial gear (T3, T4) is after the step of opening of the clutch corresponding to the initial gear (T1, T2) is including a phase of opening controlled in position of the synchronizer device of the initial gear.

7. The method according to any one of the preceding claims, **characterized in that**, before the step of closing of the clutch (T10, T11) corresponding to the target gear, a step of disengagement of an initially preselected gear (T8, T9) occurs, which is of the same parity as the target gear.

8. A motor vehicle including on the one hand a power train (10) including an automatic transmission (14), a dual clutch (16) and an engine (12), each transmission ratio being determined by a gear (51, 61; 42, 62; 53, 63; PF46, 64; 55, 65; PF46, 66) having a fixed pinion (51; 42; 53; PF46; 55) relative to a primary shaft (AP1, AP2) of the gearbox and an idle pinion (61; 62; 63; 64; 65; 66) relative to a secondary shaft (AS1, AS2) of the gearbox which includes two primary shafts, one (AP1) of which is dedicated to even gears and the other of which (AP2) is dedicated to uneven gears, each of the primary shafts being associated with a specific clutch (25, 26) belonging to the dual clutch, **characterized in that** it includes a control unit, implementing the control method according to one of Claims 1 to 7, controlling the engine, the dual clutch and the gearbox with its synchronizer devices (S1S5, S3, S2S6, S4M) so as to carry out the disengagement of the initial gear (T3, T4), the adjustment of the engine speed (T0, T14) as a function of the non-consecutive target gear to the initial gear, the closing of the clutch (T10, T11) corresponding to the target gear while the synchronizer device of this target gear is in a neutral state and the synchronization (T13, T14, T15) via the synchronizer device of the target gear, the synchronization (T13, T14, T15) including a phase of controlling in force (T13, T14) of the synchronizer device of the target gear during the end of the closing of the clutch, then a phase of final engagement controlled in position (T14, T15) of said synchronizer device, to terminate the engagement of the target gear while the end of the closing of the clutch occurs and an instant (T11) of end of closing of the clutch corresponding to the target gear occurring during the phase of final engagement controlled in position (T14, T15) of the synchronizer device of the target gear.
